Europäisches Patentamt

European Patent Office

Office européen des brevets

(19)

(11) Veröffentlichungsnummer : **0 004 652**
**B2**

(12) # NEUE EUROPÄISCHE PATENTSCHRIFT

(45) Veröffentlichungstag der neuen Patentschrift :
18.09.85

(21) Anmeldenummer : 79100984.8

(22) Anmeldetag : 31.03.79

(51) Int. Cl.⁴ : **H 01 F   1/11, G 11 B   5/70,**
**C 09 C   1/24, C 01 G   49/06**

(54) **Verfahren zur Herstellung von Eisenoxiden zur magnetischen Signalaufzeichnung.**

(30) Priorität : 12.04.78 DE 2815712

(43) Veröffentlichungstag der Anmeldung :
**17.10.79 Patentblatt 79/21**

(45) Bekanntmachung des Hinweises auf die Patenterteilung : **21.10.81 Patentblatt 81/42**

(45) Bekanntmachung des Hinweises auf die Entscheidung
über den Einspruch : **18.09.85 Patentblatt 85/38**

(84) Benannte Vertragsstaaten :
**BE DE FR GB IT NL**

(56) Entgegenhaltungen :
**DE-A- 2 243 231**
**DE-A- 2 507 420**
**DE-B- 1 252 646**
**FR-A- 2 197 818**
**US-A- 3 382 174**

(73) Patentinhaber : **BAYER AG**
**Konzernverwaltung RP Patentabteilung**
**D-5090 Leverkusen 1 Bayerwerk (DE)**

(72) Erfinder : **Buxbaum, Gunter, Dr.**
**Holzapfelweg 2**
**D-4150 Krefeld 1 (DE)**
Erfinder : **Pflugmacher, Ingo, Dr.**
**Asternstrasse 16**
**D-4005 Meerbusch 3 (DE)**
Erfinder : **Hund, Franz, Dr.**
**Scheiblerstrasse 89**
**D-4150 Krefeld 1 (DE)**
Erfinder : **Hahnkamm, Volker, Dr.**
**Dörperhofstrasse 14**
**D-4150 Krefeld 1 (DE)**
Erfinder : **Woditsch, Peter, Dr.**
**Deswatinesstrasse 83**
**D-4150 Krefeld 1 (DE)**

EP 0 004 652 B2

Jouve, 18, rue St-Denis, 75001 Paris, France

## Beschreibung

Die Erfindung betrifft ein Verfahren zur Herstellung von magnetischen Eisenoxiden mit verbesserter Ausrichtbarkeit bei der Einarbeitung in ein Band zur magnetischen Signalaufzeichnung und ein Verfahren zu deren Herstellung.

Für die Aufzeichnung von Signalen auf magnetischen Trägern werden seit den Arbeiten von Camras anisometrische Oxide verwendet, zumeist $\gamma$-$Fe_2O_3$, zu deren Herstellung von einer anisometrisch kristallisierenden Vorläuferverbindung ausgegangen wird. In der überwiegenden Mengen wird als Vorläuferverbindung $\alpha$-FeOOH, Goethit, eingesetzt, der nach Entwässerung durch Reduktion mit Wasserstoff zu $Fe_3O_4$ und anschließenden Oxidation in $\gamma$-$Fe_2O_3$ konvertiert wird.

Durch die stürmische Entwicklung der magnetischen Aufzeichnungstechnik und den Drang zu höherer Aufzeichnungsdichte bei dünner werdenden magnetischen Schichten, wie sie in der Cassetten-Technik eingesetzt werden, genügen die herkömmlichen $\gamma$-$Fe_2O_3$-Materialien den erhöhten Anforderungen nicht mehr.

Ein wesentlicher Faktor, der die Qualität einer Magnetband-Aufzeichnung bestimmt, ist die Aussteuerbarkeit oder Voll-Aussteuerung. Diese Größe beschreibt zusammen mit dem Rauschen den Dynamik-Bereich eines Magnetbandes.

Bekanntermaßen wird die Aussteuerbarkeit direkt durch die gerichtete Packbarkeit des magnetischen Materials in der Aufzeichnungsschicht beeinflußt. Diese gerichtete Packbarkeit wird gemessen als remanente Magnetisierung in der Bandrichtung dividiert durch die Sättigungsmagnetisierung ($B_r/4\pi I_s$). Diese Größe wird auch als « Ausrichtbarkeit » bezeichnet. Je höher $B_r/4\pi I_s$ ist, umso größer ist auch, gleiches Rauschniveau vorausgesetzt, der Dynamikbereich eines Magnetbandes. Einem möglichst hohen $B_r/4\pi I_s$ entgegen wirken nun mehrere Faktoren : Zum einen zeigt das Ausgangsmaterial $\alpha$-FeOOH häufig Verwachsungen und Dendriten. Hier kann man, wie die US-A-3 931 925 lehrt, eine Optimierung vornehmen, zum anderen treten während der Konvertierung durch die notwendigen hohen Temperaturen Versinterungen und zusätzliche Verwachsungen auf. Diese Versinterungen verhindern aber die ordentliche Ausrichtung der magnetischen Einzelteilchen bei der Herstellung eines Magnetbandes. Weiterhin besitzen derartig versinterte Einzelteilchen nur minderwertige magnetische Eigenschaften, unter anderem ein hohes Rauschen. Damit überhaupt brauchbare Magnetbänder aus derartig versinterten Pigmenten erhalten werden können, müssen diese Aggregate durch lange und intensive Mahlung zerstört werden, wobei aber andere Eigenschaften des Magnetbandes, z. B. Koerzitivfeldstärke und Kopierdämpfung negativ beeinflußt werden.

Zur Vermeidung dieser Versinterungen muß man Vorsorgemaßnahmen treffen. Einige Maßnahmen, wie etwa eine Umhüllung mit $SiO_2$, Ti-, Zr- oder Al-oxid (DE-B-1 252 646) oder eine Umhüllung mit Phosphat oder Borat (US-P-3 652 334) oder auch mit Cr(III)-oxid (DE-A-1 803 783) sind bekannt. Diese Maßnahmen bewirken zwar eine Verbesserung der Ausrichtbarkeit, aber nicht in dem notwendigen Maße. Aus der DE-A-2 507 420 ist die Auffällung von Oxiden und/oder Phosphaten auf Co-haltige Vorläuferverbindungen zur Remaneszenzstabilisierung bekannt. Diese Maßnahme bewirkt ebenso wie die Umhüllung nach DE-B-1 252 646 oder D-B-1 803 783 nur einen unvollkommenen Schutz gegen Versinterungen, da eine gleichmäßige Umhüllung in nur einem Schritt nicht gewährleistet ist. Weiterhin ist eine Umhüllung mit Silicium-organischen Verbindungen vorgeschlagen (US-A-4 014 710). Si-organische Verbindungen sind jedoch in einer Reihe von Lackrezepturen unverträglich, ihre Anwendung verbietet sich daher häufig.

Ebenfalls zur Verbesserung der Ausrichtbarkeit wurden mehrere Verfahren vorgeschlagen, bei denen der Konvertierung verschiedene organische Verbindungen, wie Carbonsäuren (DE-B-1 771 327), Amine, Amide, Alkohole (DE-A-2 064 804), Paraffine und ähnliche, auf die Vorläuferverbindungen aufgebracht werden und diese organischen Verbindungen bzw. deren Zersetzungsprodukte zur Reduktion der Vorläuferverbindung benutzt werden. Durch die Brenzreaktion entstehen jedoch erhebliche Mengen gefährlicher und geruchsbelästigender Abgase, die durch aufwendige. Nachverbrennung oder andere Maßnahmen beseitigt werden müssen. Diesen Nachteil besitzen anorganische Nachbehandlungen nicht.

Überraschenderweise wurde nun gefunden, daß eine wesentliche Verbesserung der Ausrichtbarkeit erreicht wird, wenn die Eisenoxidhydroxidvorläuferverbindung mehreren anorganischen Nachbehandlungen unterworfen wird.

Gegenstand der vorliegenden Verbindung ist daher ein Verfahren zur Herstellung von hoch ausrichtbarem, nadelförmigem, ferrimagnetischem Eisenoxid durch Reduktion und Reoxidation von nadelförmigem, gegen Versinterung oberflächenbehandeltem, gegebenenfalls mit Fremdmetallionen dotiertem Eisenoxidhydroxid, das dadurch gekennzeichnet ist, daß auf das Eisenoxidhydroxid in mindestens zwei aufeinanderfolgenden Schichten alternierend sauerstoffhaltige Anionen und mehrwertige Kationen in Mengen von 0,02 bis 2 Gew.- %, vorzugsweise 0,1 bis 1 Gew.- %, je Schicht beginnend mit einer Aninonschicht, aufgebracht werden.

Als erste Schicht wird vorzugsweise ein mehrbasisches Anion, das eine Präferenz für Eisenoxidoder Eisenoxidhydroxidoberflächen besitzt, wie Phosphat, Borat, Vanadat, Molybdat, Silikat oder Wolframat aufgebracht. Als mehrwertige Kationen werden die Ionen der Metalle Aluminium, Chrom, Mangan, Eisen und/oder Gallium bevorzugt.

Die Oberflächenschichten können z. B. durch Auflösen der wasserlöslichen Salze in einer wäßrigen Suspension der nadelförmigen Eisenoxidhydroxide auf die Eisenoxidhydroxide aufgebracht werden. Zur Aufbringung der Anionenschichten können vorzugsweise die Alkalisalze der Anionen eingesetzt werden. Zur Aufbringung der mehrwertigen Metallionen können z. B. deren Chloride, Sulfate und/oder Hydroxide eingesetzt werden. Bevorzugt werden die genannten Nachbehandlungssubstanzen jeweils in solchen Mengen eingesetzt, da sich auf den Eisenoxidhydroxiden monomolekulare bzw. monoatomare Schichten ausbilden.

Obwohl im allgemeinen eine zweistufige Nachbehandlung bereits hervorragende Ergebnisse liefert, wird eine dreistufige Nachbehandlung der Schichtfolge Anion-Kation-Anion als optimal angesehen. Oftmals kann bei weiterer Erhöhung der Anzahl der Schichten eine weitere Verbesserung der Ausrichtbarkeit beobachtet werden, jedoch erhöht sich damit auch der Aufwand der Nachbehandlung.

Die so behandelten Eisenoxidhydroxide, im bevorzugten Falle $\psi$-FeOOH, können bei erhölten Temperaturen behandelt werden, ohne daß während der Konvertierung zu nadelförmigen ferrimagnetischen Eisenoxiden Versinterungen auftreten. Auch ein übermäßiges Wachstum der nadelförmigen Pigmentteilchen während der Konvertierung wird zuverlässig verhindert. Vorzugsweise wird vor der Reduktion und Reoxidation eine Temperung der oberflächenbehandelten Eisenoxidhydroxide zwischen 600 und 900 °C durchgeführt.

Die erfindungsgemäß durch die Nachbehandlungen erzeugten Oberflächenschichten werden durch die Temperaturbehandlung und Konvertierung der Eisenoxidhydroxide im wesentlichen nicht zerstört.

Die erfindungsgemäß hergestellten Eisenoxide weisen nach dem Einbau in eine magnetische Aufzeichnungsschicht eine magnetische Ausrichtbarkeit $Br/4\pi I_s$ von mindestens 0,85 auf. Ferner wird eine verbesserte Dispergierbarkeit der erfindungsgemäßen Eisenoxide im Bindemittel beobachtet.

Bei der bevorzugten mindestens dreistufigen Behandlung weisen die erfindungsgemäß hergestellten Eisenoxide eine magnetische Ausrichtbarkeit von mindestens 0,87 auf.

Nachfolgend wird die Erfindung anhand von Beispielen näher erlautert :

## Beispiele

Bei den folgenden Beispielen wird jeweils ein $\alpha$-FeOOH eingesetzt, das eine röntgenographisch bestimmte Nadelbreite von ca. 300 Å, ein Länge/Breite-Verhältnis von ca. 10 und eine spezifische Oberfläche nach BET von ca. 30 m²/g aufweist. Das $\alpha$-FeOOH wurde nach dem Fällungsverfahren hergestellt, indem zunächst eine Keimbildung unter Zugabe von Phosphat gemäß Beispiel 1 der DE-B-1 176 111 und daran eine Pigmentbildung unter Zufuhr von Natronlauge und Luft gemäß US-A-3 652 334, Beispiel 1 durchgeführt wurden. Nach der Filtration wird der ausgewaschene Filterkuchen von jeweils 2 kg $\alpha$-Fe-OOH in entsaltztem Wasser zu einer Suspension mit etwa 80 g/l Feststoff angemaischt.

## Beispiel 1

### (Vergleichsbeispiel)

Die Suspension wird unter Rühren auf 80 °C aufgeheizt und wahrend aller Operationen bei dieser Temperatur gehalten. Der pH-Wert der Suspension, gemessen mit einer Glaselektrode, wird mit verd, Schwefelsäure auf ca. 4 eingestellt. 26,1 g $Na_4P_2O_7 \cdot 10 H_2O$ (entsprechend 0,42 Gew.- % $P_2O_5$ bez. auf $\alpha$-FeOOH) werden kalt in 200 ml Wasser gelöst. Diese Lösung wird unter Rühren während eines Zeitraums von 30 Minuten zu der $\alpha$-FeOOH-Suspension zugetropft. Der sich zum alkalischen Bereich hin verändernde pH-Wert wird durch Zutropfen von Schwefelsäure auf 4 gehalten. Zur Vervollständigung der Reaktion wird eine halbe Stunde nachgerührt. Die Suspension wird abgesaugt, mit 2 l Wasser Nachgewaschen und getrocknet. Die Umwandlung zu magnetischem Eisenoxid erfolgt auf üblichen Wege. Nach der Entwässerung bei 300-400 °C $\alpha$-Fe$_2$O$_3$ wird das Material zur Einstellung der gewünschten Kristallitgröße 30 Minuten bei 750 °C getemperet. Die Reduktion zu Fe$_3$O$_4$ erfolgt bei 450 °C in 50 Minuten mit feuchtem Wasserstoff, die Reoxidation 1 Stunde lang mit Luft bei 300 °C.

## Beispiel 2

Es wird wie in Beispiel 1 mit $Na_4P_2O_7$-Lösung behandelt und danach werden der Suspension 31,4 g $FeSO_4 \cdot 7 H_2O$, gelöst in 200 ml $H_2O$, innerhalb einer halben Stunde zugegeben. Danach wird der pH-Wert durch Zutropfen von NaOH-Lösung innerhalb von 10 Minuten auf 8 hochgestellt. Es wird 30 Minuten nachgerührt. Die Weiterverarbeitung erfolgt gemäß Beispiel 1.

## Beispiel 3

Es wird wie in Beispiel 2 verfahren, jedoch wird anstelle der Eisensalzlösungen eine Lösung von 25,0 g $(Al(SO_4)_3 \cdot 18 H_2O$ in 200 ml Wasser eingesetzt.

Beispiel 4

Es wird wie in Beispiel 2 verfahren, jedoch wird anstelle der Eisensalzlösung eine Lösung von 14,7 g $Cr_2(SO_4)_3$ in 200 ml Wasser eingesetzt.

Beispiel 5

Es wird in Beispiel 4 verfahren, jedoch wird nur 7,4 g $Cr_2(SO_4)_3$ in 200 ml Wasser eingesetzt.

Beispiel 6

Es wird wie im 2. Beispiel verfahren, jedoch wird anstelle der Eisensalzlösung eine Lösung von 9,6 g $MnSO_4 \cdot H_2O$ in 200 ml Wasser eingesetzt.

Beispiel 7

Es werden 776 g FeOOH in 10 l Wasser wie in Beispiel 5 mit 7,3 g $Na_4P_2O_7 . 10 H_2O$ und 5,1 g $KCr(SO_4)_2 . 12 H_2O$ behandelt und daran anschließend wird bei pH mit 7,3 h $Na_4P_2O_7 . 10 H_2O$ in 300 ml $H_2O$ eine 3. Schicht aufgebracht.

Die Bandherstellung erfolgt jeweils mit einer Standardrezeptur nach der GB-A 1 080 614 auf PVC-PVA-Basis : 22,4 Gew.-Teile des magnetischen Oxids werden mit 8,0 Gew-Teilen eines PVC-PVA-Mischpolymerisats unter Zusatz von 1,3 Teilen Ölsäure, 0,88 Teilen organischer Phorphosäureester und 67 Teilen Butyl/Äthylacetate (1 : 1) in einer Perlmühle 3 1/2 Stunden gemahlen. Anschließend wird der Lack auf einer 23 µm dicken Polyesterfolie vergossen, magnetisch gerichtet und kalandiert. Die magnetische Schicht hat eine Stärke von 12 µm und enthält 15 g/m² Magnetpigment.

An den erhaltenen Magnetbändern werden jeweils die Koerzitivkraft und die Ausrichtbarkeit in einem Magnetfeld von ca. 800 A/cm gemessen. Das Rauschen (UF3) nach DIN 45 405 wurde nach DIN 45 513, Blatt 4, gegen das DIN-Bezugsband C 264 bestimmt ($U_{F3} = \pm 0$ dB).

Die erhaltenen Meßwerte sind in der nachfolgenden Tabelle angegeben.

Die erfindungsgemäße Behandlung ist selbstverständlich nicht auf das hier beschriebene handelsübliche $\alpha$-FeOOH, sondern auf alle dem Fachmann wohlbekannten Ausgangsmaterialien, z. B. $\beta$-FeOOH, $\gamma$-FeOOH, für die Herstellung von nagelförmigen magnetischen Eisenoxiden anwendbar. Darüber hinaus können die Ausgangsmaterialien mit z. B. Zn, Ca, Co, Ni, Mn dotiert sein.

Tabelle

| Beispiel Nr. | $I^HC$ A/cm | $B_r/4\pi I_s$ | $U_{F3}$ dB |
|---|---|---|---|
| 1 (Vergleichsbeispiel) | 285 | 0,83 | −0,5 |
| 2 | 308 | 0,86 | −0,5 |
| 3 | 292 | 0,86 | −0,5 |
| 4 | 292 | 0,85 | −0,5 |
| 5 | 259 | 0,85 | ±0 |
| 6 | 266 | 0,865 | ±0 |
| 7 | 296 | 0,88 | −0,5 |

**Patentansprüche**

1. Verfahren zur Herstellung von hoch ausrichtbaren nadelförmigen ferrimagnetischen Eisenoxiden durch Reduktion und Reoxidation von nadelförmigen, gegen Versinterung mit Metalloxiden und deren Salzen mit sauerstoffhaltigen Anionen oberflächenbehandeltem, gegebenenfalls mit Fremdmetallionen dotiertem Eisenoxidhydroxid, dadurch gekennzeichnet, daß auf das Eisenoxidhydroxid in mindestens zwei aufeinanderfolgenden Schichten alternierend Sauerstoff-haltige Anionen und mehrwertige Kationen in Mengen von 0,02 bis 2 Gew-% je Schicht beginnend mit einer Anionenschicht aufgebracht werden.

2. Verfahren nach Anspruch 1, dadurch gekennzeichnet, daß die Schichten in Mengen von jeweils 0,1 bis 1 Gew.-% aufgebracht werden.

3. Verfahren nach Anspruch 1 oder 2, dadurch gekennzeichnet, daß als Sauerstoff-haltige Anionen Silikat, Phosphat, Borat, Vanadat, Molybdat und/oder Wolframat eingesetzt werden.

4. Verfahren nach einem der Ansprüche 1 bis 3, dadurch gekennzeichnet, daß als mehrwertige Kationen Aluminium, Chrom, Mangan, Eisen und/oder Gallium eingesetzt werden.

5. Verfahren nach einem der Ansprüche 1 bis 4, dadurch gekennzeichnet, daß vor der Reduktion und Reoxidation eine Temperung der oberflächenbehandelten Eisenoxidhydroxide zwischen 600 und 900 °C erfolgt.

6. Verfahren nach einem der Ansprüche 1 bis 5, dadurch gekennzeichnet, daß 3 Oberflächenschichten aufgebracht werden.

## Claims

1. Process for the production of highly orientatable needle-shaped ferrimagnetic iron oxides by the reduction and reoxidation of needle-shaped hydrated oxide of iron which has been surface treated against sintering with metal oxides and their salts with oxygen-containing anions, and which has optionally been doped with foreign metal ions, characterised in that oxygen-containing anions alternating with polyvalent cations are applied to the hydrated oxide of iron in at least two successive layers and in quantities of 0.02 to 2 % by weight in each layer, starting with an anion layer.

2. Process according to Claim 1, charaterised in that the layers are in each case applied in an amount of 0.1 to 1 % by weight.

3. Process according to Claim 1 or 2, characterised in that the oxygen-containing anions used are silicate, phosphate, borate, vanadate, molybdate and/or tungstate.

4. Process according to one of Claims 1 to 3, characterised in that the polyvalent cations used are aluminium, chromium, manganese, iron and/or gallium.

5. Process according to one of Claims 1 to 4, characterised in that before reduction and reoxidation the surface treated hydrated oxides of iron are tempered at between 600 and 900 °C.

6. Process according to one of Claims 1 to 5, characterised in that 3 surface layers are applied.

## Revendications

1. Procédé de préparation d'oxydes de fer ferrimagnétiques aciculaires d'une haute aptitude à l'orientation par réduction et réoxydation d'oxydohydroxyde de fer aciculaire, soumis à un traitement superficiel contre le frittage avec des oxydes métalliques et leurs sels avec des anions oxygénés, et éventuellement dopé avec des ions de métaux étrangers, caractérisé en ce que, sur l'oxydohydroxyde de fer, on applique, en au moins deux couches successives, alternativement des anions oxygénés et des cations polyvalents en quantités de 0,02 à 2 % en poids, chaque couche commençant par une couche d'anions.

2. Procédé suivant la revendication 1, caractérisé en ce qu'on applique les couches en quantités se situant chaque fois entre 0,1 et 1 % en poids.

3. Procédé suivant la revendication 1 ou 2, caractérisé en ce que, comme anions oxygénés, on utilise un silicate, un phosphate, un borate, un vanadate, un molybdate et/ou un tungstate.

4. Procédé suivant une des revendications 1 à 3, caractérisé en ce que, comme cations polyvalents, on utilise l'aluminium, le chrome, le manganèse, le fer et/ou le gallium.

5. Procédé suivant une des revendications 1 à 4, caractérisé en ce que, avant la réduction et la réoxydation, on soumet les oxydohydroxydes de fer traités superficiellement à un recuit à une température comprise entre 600 et 900 °C.

6. Procédé suivant une des revendications 1 à 5, caractérisé en ce qu'on applique trois couches superficielles.